# EUROPEAN PATENT APPLICATION

(11) **EP 4 439 266 A1**
(43) Date of publication of application: **02.10.2024**
(21) Application number: 23802708.0
(22) Date of filing: 28.04.2023
(51) Int. Cl.: G06F 3/04847

(54) **VIDEO PLAYING METHOD AND APPARATUS, ELECTRONIC DEVICE, STORAGE MEDIUM AND PROGRAM PRODUCT**

(30) Priority: 12.05.2022 CN 202210519456
(71) Applicant: Beijing Zitiao Network Technology Co., Ltd., Beijing 100190 (CN)
(72) Inventor: ZHANG, Kai, Beijing 100028 (CN)
(74) Representative: Dentons UK and Middle East LLP
(86) International application number: PCT/CN2023/091705
(87) International publication number: WO 2023/216936

(57) **Abstract**

Embodiments of the present disclosure provide a video playing method and apparatus, an electronic device, a storage medium and a program product. The method comprises: displaying a detail page of a target video, wherein the detail page comprises a video playing area and an information display area; receiving a page switching operation, wherein the page switching operation comprises a first sliding operation in the detail page, a second sliding operation in the video playing area or a click operation in the video playing area; and in response to the page switching operation, switching the current page from the detail page to a first video playing page, and playing the video on the basis of the video stream on the first video playing page, wherein the video stream contains a target video or a video associated with the target video.

## Description

### CROSS-REFERENCE TO RELATED APPLICATION

This application claims the priority of Chinese Patent Application No.202210519456.3 filed in Chinese Patent Office on May 12, 2022, the entire contents of the Chinese patent application are incorporated by reference in this application.

### TECHNICAL FIELD

The embodiment of the disclosure relates to the technical field of computers, such as a video playing method, apparatus, electronic device, storage medium and program product.

### BACKGROUND

Users can view the video information of a video in a detail page, or browse different videos in a video playing page.

In the related art, the switching mode from a video detail page to a video playing page is relatively simple, which cannot meet the requirement of users.

### SUMMARY

Embodiments of the present disclosure provide a video playing method, apparatus, electronic device, storage medium and program product, so as to enrich the switching mode of switching from a detail page to a video playing page.

The embodiment of the disclosure provides a video playing method, which comprises the following steps: displaying a detail page of a target video, wherein the detail page comprises a video playing area and an information display area, wherein the video playing area is used for playing the target video, and the information display area is used for displaying video information of the target video; receiving a page switching operation, wherein the page switching operation comprises a first sliding operation acting in the detail page, a second sliding operation acting in the video playing area or a clicking operation acting in the video playing area; in response to the page switching operation, switching a current page from the detail page to a first video playing page, and playing a video playing based on a video stream of the first video playing page, wherein the video stream comprises the target video or an associated video of the target video.

The embodiment of the present disclosure also provides a video playing apparatus, which comprises a page display module configured to display a detail page of a target video, wherein the detail page comprises a video playing area and an information display area, wherein the video playing area is used for playing the target video, and the information display area is used for displaying video information of the target video; an operation receiving module configured to receive a page switching operation, wherein the page switching operation comprises a first sliding operation acting in the detail page, a second sliding operation acting in the video playing area or a clicking operation acting in the video playing area; and a page switching module, configured to in response to the page switching operation, switch a current page from the detail page to a first video playing page, and playing a video based on a video stream of the first video playing page, wherein the video stream comprises the target video or an associated video of the target video.

An embodiment of the present disclosure also provides an electronic device, which includes:
at least one processor; and a memory communicatively connected with the at least one processor; wherein the memory stores a computer program executable by the at least one processor, and the computer program is executed by the at least one processor to enable the at least one processor to execute the video playing method according to the embodiment of the present disclosure.

The embodiment of the present disclosure also provides a computer-readable storage medium, storing computer instructions; and the computer instructions are used for, when executed by a processor, realizing the video playing method according to the embodiment of the present disclosure.

The embodiment of the present disclosure also provides a computer program product, which includes a computer program, when the computer program is executed by a processor, the video playing method according to the embodiment of the present disclosure is realized.

### BRIEF DESCRIPTION OF DRAWINGS

FIG. 1 is a flowchart of a video playing method provided by an embodiment of the present disclosure;
FIG. 2 is a display schematic diagram of a detail page of a target video provided by an embodiment of the present disclosure;
FIG. 3 is a display schematic diagram of a second video playing page provided by an embodiment of the present disclosure;
FIG. 4 is a flowchart of another video playing method provided by an embodiment of the present disclosure;
FIG. 5 is a structural block diagram of a video playing apparatus provided by an embodiment of the present disclosure;
FIG. 6 is a structural schematic diagram of an electronic device provided by an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

Names of messages or information exchanged among multiple apparatus in the embodiment of the present disclosure are only used for illustrative purposes, and are not used to limit the scope of these messages or information.

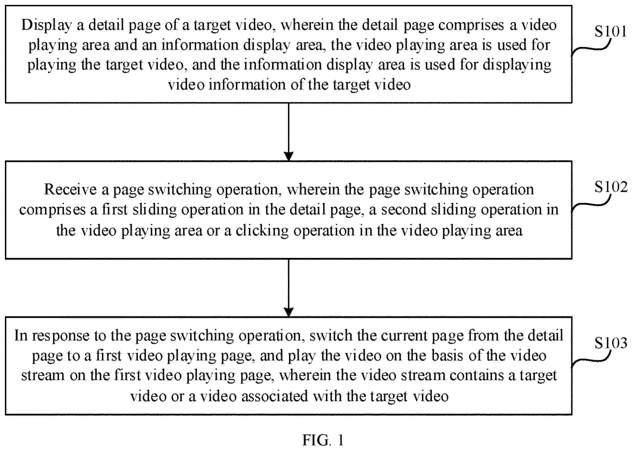

FIG. 1 is a flowchart of a video playing method provided by an embodiment of the present disclosure. The method can be executed by a video playing apparatus, which can be realized by software and/or hardware, and can be configured in electronic device, such as a mobile phone or a tablet computer. The video playing method provided by the embodiment of the present disclosure is suitable for the scene where the detail page of a video is switched to the playing page of a video stream. As shown in FIG. 1, the video playing method provided by this embodiment may include the following steps.

S101: displaying a detail page of a target video, in which the detail page comprises a video playing area and an information display area, in which the video playing area is used for playing the target video, and the information display area is used for displaying video information of the target video.

The target video can be a video corresponding to the currently displayed detail page, i.e., a video played in the video playing area of the detail page, and i.e., a video corresponding to the video information displayed in the information display area of the detail page.

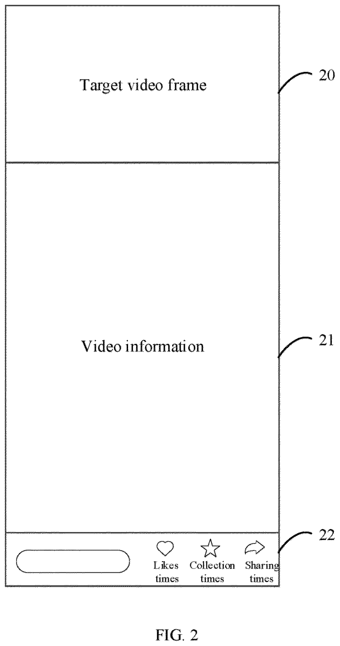

The detail page of the video can be a page for displaying the video information of the corresponding video, and the detail page of different videos is used for displaying the video information of different videos. As shown in FIG. 2, a video playing area 20 and an information display area 21 located outside the video playing area 20 can be set in the detail page of the target video, and the video playing area 20 can be used for playing the target video and the information display area 21 can be used for displaying the video information of the target video. For example, the video information of the target video may include interactive information of the target video, such as comment information received by the target video; and the video information of the target video may also include publish information of the target video and/or description information of the target video.

A detail page of the target video can be displayed, the target video can be played in the video playing area 20 of the detail page, and the video information of the target video can be displayed in the information display area 21 of the detail page, such as the comment information received by the target video, the publish information of the target video (such as the publisher's avatar and user name), the description information of the target video and/or the publish time of the target video.

In addition, please continue to refer to FIG. 2, an interactive area 22 can also be set in the detail page, which can be located outside the video playing area 20 and the information display area 21 of the detail page. The interactive area 22 can display an input box, a like control, a collection control and/or a sharing control corresponding to the target video, so that a user can comment on the target video through the input box and/or send a barrage in the target video, praise the target video by triggering the like control, collect the target video by triggering the like control, or share the target video by triggering the sharing control.

In this embodiment, the detail page of the target video can be displayed based on the user's trigger operation, such as switching into the detail page of the target video from other pages based on the user's trigger operation, which can be, for example, a video list page showing video items (such as video names or video covers, etc.) of different videos (including the target video) or a video playing page for playing at least one video including the target video, etc. This embodiment is not limited here.

In one embodiment, the displaying the detail page of the target video includes: when the target video is played in a main display area of a second video playing page, switching the current page from the second video playing page to the detail page of the target video in response to a video detail viewing operation acting in the second video playing page.

The second video playing page can be any video playing page used to play the target video, such as a video playing page used to play the target video only, or a video browsing page used to play at least two videos including the target video in turn based on the video switching operation of the user, etc. The video detail viewing operation may be a trigger operation to view the detail page of the target video, such as an operation to trigger a video profile of the target video displayed in the second video playing page and/or a comment control corresponding to the target video.

In the above embodiment, the user can switch to the detail page of the target video to view the video information of the target video when watching the target video.

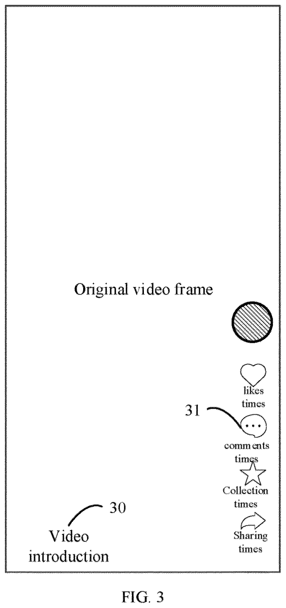

For example, the electronic device plays a video in the video playing page of a video, or plays a video in the video streaming in the video browsing page based on the video streaming of the video browsing page, and displays a video profile 30 of the video and/or an interactive control (such as a comment control 31) corresponding to the video and used for switching to the detail page of the video on an upper layer of the video picture of the currently played video, as shown in FIG. 3. Therefore, when the user wants to view the video information of the currently played video, the user can perform a video detail viewing operation, such as triggering the video profile 30 or the interactive control. Accordingly, when the electronic device detects that the user triggers the video profile 30 or interactive control of the currently played video, it can take the currently played video as the target video, confirm that the video detail viewing operation for the target video has been received, and the current page is switched to the video detail page of the target video in response to the video detail viewing operation, the target video is continuously played in the video play area 20 of the video detail page, and the video information of the target video is displayed in the information display area 21 of the video detail page, as shown in FIG. 2.

S102: receiving a page switching operation, in which the page switching operation comprises a first sliding operation acting in the detail page, a second sliding operation acting in the video playing area or a clicking operation acting in the video playing area.

The page switching operation is understood as a trigger operation for indicating to switch the current page from the detail page of the target video to the video playing page, such as the first sliding operation acting in the video playing page, the second sliding operation acting in the video playing area or the clicking operation acting in the video playing area of the target video. The first sliding operation may be a sliding operation of sliding in a set direction on the detail page, such as an operation of sliding to the right in the detail page. The second sliding operation may be a sliding operation acting in the video playing area of the detail page and sliding in another set direction, such as a vertical sliding (such as sliding down) operation acting in the video playing area of the detail page. The click operation acting in the video playing area can be understood as a click operation acting in the blank position of the video playing area. It should be noted that the blank position can be a position where the trigger control is not displayed, rather than a position where any content (such as video pictures) is not displayed.

When the user wants to switch from the video detail page of the target video to the first video playing page, the user can perform page switching operations, such as sliding to the right in the detail page, sliding down in the video playing area of the detail page, or clicking on the blank position of the video playing area. Therefore, when the electronic device detects that the user slides to the right in the detail page, slides down in the video playing area of the detail page, or clicks on a blank position of the video playing area, it can be determined that the page switching operation is received.

It can be understood that the detail page of the target video can also display a trigger control for triggering the above-mentioned page switching operation, so that the user can also perform the page switching operation by triggering the trigger control, and at this time, the page switching operation can also include a trigger operation acting on the trigger control displayed in the detail page.

S 103 : in response to the page switching operation, switching a current page from the detail page to a first video playing page, and playing a video based on a video stream of the first video playing page, in which the video stream comprises the target video or an associated video of the target video.

The first video playing page can be a video browsing page. When the second video playing page is a video browsing page, the first video playing page and the second video playing page can be the same page or different pages. For example, the second video playing page can be returned based on the user's page switching operation, or the current page can be switched to a preset video browsing page. The video browsing page may have a corresponding video stream, which may include the target video or the associated video of the target video, and may play different videos in the video stream and/or the associated video of the target video in the video stream in turn based on the video switching operation of the user. The associated video of the video can be understood as a video that is associated with the video in one aspect or some aspects, such as a video that is associated with the video in content.

When the user's page switching operation is received, the video stream of the first video playing page can be obtained, the current page is switched from the detail page of the target video to the first video playing page, and a video in its corresponding video stream or an associated video of a video in the video stream is played in the first video playing page.

Therefore, the user can switch the video played in the first video playing page by performing a video switching operation (such as a vertical sliding operation or a horizontal sliding operation). In an alternative embodiment, the user can switch the currently playing video of the video playing page to another video adjacent to the currently playing video or another video adjacent to the associated video of the currently playing video in the first video stream through vertical sliding operation; and/or the currently playing video of the video playing page can be switched to the associated video of the currently playing video through the horizontal sliding operation (aiming at the situation that the currently playing video has the associated video).

In this embodiment, when acquiring the video stream of the first video playing page, the video stream including the target video or the associated video of the target video can be generated directly based on a video stream generation rule of the first video playing page without considering the video stream of the second video playing page, and the video stream including the target video or the associated video of the target video can be used as the video stream of the first video playing page. When obtaining the video stream of the first video playing page, the video stream of the second video playing page can also be considered. When the first video playing page and the second video playing page are the same page, the video stream of the second video playing page, when switching into the detail page of the target video, is obtained, and the video stream of the second video playing page is taken as the video stream of the first video playing page; when the first video playing page and the second video playing page are different pages, a video stream including the target video or the associated video of the target video is generated based on the video stream generation rule of the first video playing page, and the video stream including the target video or the associated video of the target video is taken as the video stream of the first video playing page.

When switching from the detail page to the first video playing page, the video played in the first video playing page can be set as required, such as playing the target video in the first video playing page, playing the associated video of the target video adjacent to the target video in the first video playing page, or playing the target video or the associated video of the target video in the video stream of the first video playing page in the first video playing page, In the first video page, the video adjacent to the target video or the video adjacent to the associated video of the target video in the video stream is played, which is not limited in this embodiment.

In this embodiment, the user can switch from a video detail page of a video to a video play page by performing a simple sliding operation or clicking operation in the video play area, and watch different videos in the video play page, which can enrich the switching mode from the video detail page to the video play page and improve the user's experience.

In this embodiment, when the video detail page of the target video is displayed, the user can switch the video information displayed in the information display area through the third sliding operation. At this time, the video playing area can be displayed in the video detail page, that is, the target video can be played at a fixed position on the screen without moving out of the display area of the screen with the third sliding operation of the user, so that the user can watch the target video while viewing the video information of the target video. At this time, optionally, after displaying the detail page of the target video, the method further includes: in response to a third sliding operation in the information display area, switching video information of the target video displayed in the information display area, and controlling a position of the video playing area to remain unchanged. For example, the third sliding operation may be an operation with a different action area and/or a different sliding direction from the first sliding operation, for example, the third sliding operation may be a vertical sliding operation acting in the information display area.

The video playing method provided by this embodiment displays a detail page of a target video, wherein the detail page includes a video playing area and an information display area, wherein the video playing area is used for playing the target video and the information display area is used for displaying the video information of the target video; receives a page switching operation, wherein the page switching operation comprises a first sliding operation acting in the detail page, a second sliding operation acting in the video playing area or a clicking operation acting in the video playing area; in response to the page switching operation, switches a current page from the detail page to a first video playing page, and play a video based on a video stream of the first video playing page, wherein the video stream comprises the target video or an associated video of the target video. By adopting the above scheme, this embodiment switches from the video detail page to the video play page based on the user's sliding operation or clicking operation in the video play area, which can enrich the switching mode from the video detail page to the video play page and improve the user's experience.

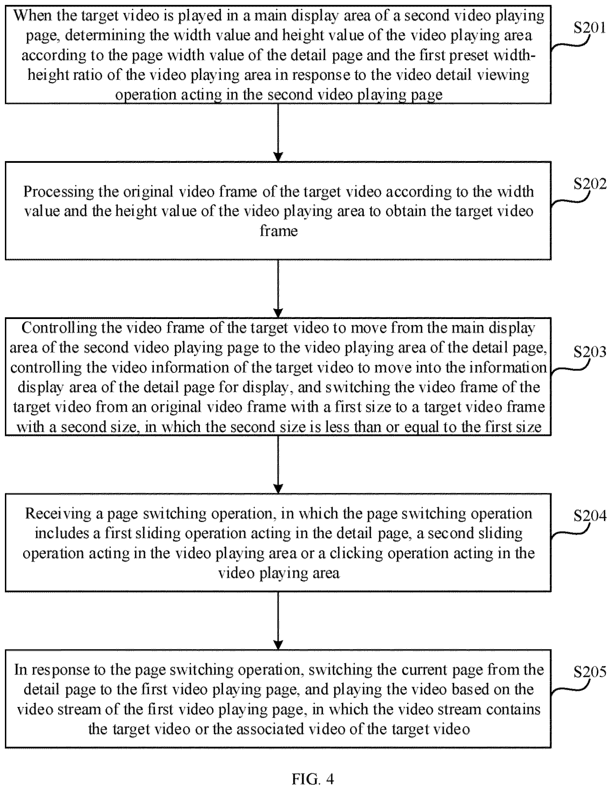

FIG. 4 is a flowchart of another video playing method provided by an embodiment of the present disclosure. The solution in this embodiment can be combined with one or more alternatives in the above embodiment. Optionally, switching the current page from the second video playing page to the detail page of the target video includes: controlling a video frame of the target video to move from the main display area of the second video playing page to the video playing area of the detail page, and controlling the video information of the target video to move into the information display area of the detail page for display.

Optionally, the switching of the current page from the second video playing page to the detail page of the target video includes: switching the video frame of the target video from an original video frame with a first size to a target video frame with a second size, wherein the second size is less than or equal to the first size.

Optionally, before switching the video frame of the target video from the original video frame with the first size to the target video frame with the second size, the method further comprises: determining a width value and a height value of the video playing area according to a page width value of the detail page and a first preset width-height ratio of the video playing area; processing the original video frame of the target video according to the width value and the height value of the video playing area to obtain the target video frame.

As shown in FIG. 4, the video playing method provided by this embodiment may include:
S201: when the target video is played in a main display area of a second video playing page, determining the width value and height value of the video playing area according to the page width value of the detail page and the first preset width-height ratio of the video playing area in response to the video detail viewing operation acting in the second video playing page.

In this embodiment, the width-height ratio of the video playing area in the detail page can be set in advance, and the width value and height value of the video playing area in the detail page can be determined based on the page width of the detail page and the width-height ratio when the video viewing operation is received.

The width value of the detail page can be taken as the width value of the video playing area, and the quotient between the width value of the video playing area and the first preset width-height ratio of the video playing area can be calculated and taken as the height value of the video playing area. The first preset width-height ratio can be understood as the ratio between the width value of the video playing area and the height value of the video playing area, which can be flexibly set as required, for example, the first preset width-height ratio can be set to a value greater than 1 (such as 16/9, etc.), which is not limited in this embodiment.

S202: processing the original video frame of the target video according to the width value and the height value of the video playing area to obtain the target video frame.

The original video frame can be understood as the video frame of the target video when it is played in the second video playing page, and the original video frame can have a first size. The target video frame can be understood as the video frame of the target video when it is played in the video playing area of the detail page of the target video, and the target video frame can have a second size, which is less than or equal to the first size.

In this embodiment, the original video frame of the target video can be processed according to the determined width value and height value of the video playing area, and the target video frame with the size matching the size of the video playing area can be obtained. Here, the processing mode of the original video frame can be flexibly set, as long as the size of the processed target video frame matches the size of the video playing area. Matching the size of the target video frame with the size of the video playing area can be understood as that the size of the target video frame is less than or equal to that of the video playing area, and the width value of the target video frame is equal to that of the video playing area and/or the height value of the target video frame is equal to that of the video playing area.

For example, the width and height of the original video frame of the target video can be reduced proportionally until the size of the original video frame of the target video matches the size of the video playing area; alternatively, the original video frame of the target video is clipped directly based on the width value and height value of the video playing area to obtain the target video frame with the width value equal to that of the video playing area and the height value equal to that of the video playing area, and so on.

In this embodiment, in order to enable the user to watch a relatively complete and clear video picture, optionally, the original video frame can be reduced according to the width value or height value of the video playing area, and when the reduced video frame still cannot be fully displayed in the video playing area, the reduced video frame can be clipped to obtain the target video frame.

In one embodiment, processing the original video frame of the target video according to the width value and height value of the video playing area to obtain the target video frame includes: when a width-height ratio of the original video frame of the target video is greater than 1, scaling the original video frame according to the height value of the video playing area to obtain a first video frame, wherein a height value of the first video frame is the height value of the video playing area; clipping the first video frame according to the width value of the video playing area, when a width value of the first video frame is greater than the width value of the video playing area, to obtain the target video frame; when the width value of the first video frame is less than or equal to the width value of the video playing area, taking the first video frame as the target video frame.

For example, when the target video is a landscape video, that is, when the width value of the original video frame in the target video is greater than the height value of the original video frame in the target video, the width and height of the original video frame can be scaled proportionally according to the height value of the video playing area to obtain a video frame (i.e., the first video frame) whose height value is equal to that of the video playing area. Then whether the width value of the first video frame is greater than that of the video playing area is judged, and if the width value of the first video frame is greater than that of the video playing area, the first video frame is clipped according to the width value of the video playing area to obtain a target video frame with the width value equal to that of the video playing area; if the width value of the first video frame is not greater than the width value of the video playing area, the obtained first video frame is taken as the target video frame.

In one embodiment, processing the original video frame of the target video according to the width value and height value of the video playing area to obtain the target video frame includes: when a width-height ratio of the original video frame of the target video is greater than a second preset width-height ratio and less than or equal to 1, scaling the original video frame according to the height value of the video playing area to obtain the target video frame.

The second preset width-height ratio can be less than 1, which can be set flexibly as required. For example, the preset proportional coefficient can be set to 9/16, 10/16 or 3/4, which is not limited in this embodiment. Alternatively, the second preset width-height ratio can be set to the reciprocal of the first preset width-height ratio.

In the above embodiment, when the target video is a vertical video and the width-height ratio of the original video frame of the target video is greater than the second preset width-height ratio, the width and height of the original video frame can be scaled proportionally directly according to the height value of the video playing area, so as to obtain the target video frame whose height value is equal to that of the video playing area and whose width value is less than or equal to that of the video playing area.

In one embodiment, the processing of the original video frame of the target video according to the width value and the height value of the video playing area to obtain the target video frame includes: determining the width value of the target video frame according to the height value of the video playing area in view of the fact that the target video is a vertical screen video; scaling the original video frame according to the width value of the target video frame to obtain a second video frame, in which, the width value of the second video frame is equal to that of the target video frame; if the height value of the second video frame is greater than the height value of the video playing area, the second video frame is clipped according to the height value of the video playing area to obtain a target video frame; if the height value of the second video frame is less than or equal to the height value of the video playing area, the second video frame is taken as a target video frame.

For example, when the target video is a vertical screen video and the width value of the original video frame of the target video is less than or equal to the second preset width-height ratio, the width value of the target video frame can be determined according to the height value of the video playing area, for example, the product of the video playing area and the second preset width-height ratio can be determined as the width value of the target video frame. Then, according to the determined width value of the target video frame, the width and height of the original video frame are scaled in equal proportion to obtain a video frame (that is, the second video frame) with the same width value as the determined target video frame. Then whether the height value of the second video frame is greater than that of the video playing area is judged, and if the height value of the second video frame is greater than that of the video playing area, the second video frame is clipped according to the height value of the video playing area to obtain a target video frame with the height value equal to that of the video playing area; if the height value of the second video frame is not greater than the height value of the video playing area, the obtained second video frame is taken as the target video frame.

S203: controlling the video frame of the target video to move from the main display area of the second video playing page to the video playing area of the detail page, controlling the video information of the target video to move into the information display area of the detail page for display, and switching the video frame of the target video from an original video frame with a first size to a target video frame with a second size, in which the second size is less than or equal to the first size.

For example, in the process of switching the current page from the second video playing page to the detail page of the target video, the target video can be played continuously, and the video frame of the target video can be controlled to move from the original position when the video frame is displayed in the main display area of the second video playing page to the target position when the video frame is displayed in the video playing area of the detail page of the target video; according to the relative position relationship between the video playing area and the information display area in the detail page, the video information of the target video is controlled to move into the information display area for display from the corresponding side of the video frame of the target video along with the movement of the target video frame. For example, when the video playing area is above the information display area, the video information of the target video can be controlled to move along with the lower boundary of the video frame of the target video, so as to realize the smooth transition of the displayed content in the page and avoid the situation that the page switching is too abrupt.

In this embodiment, in the process of page switching, the video frame of the target video can also be reduced from the first size to the second size, that is, the video frame of the played target video is switched from the original video frame with the first size (as shown in FIG. 3) to the target video frame with the second size (as shown in FIG. 2), so as to show the target video frame in the video playing area. The timing for switching the video frame of the target video from the original video frame to the target video frame can be flexibly set, for example, the video frame of the target video can be switched from the original video frame to the target video frame before the video frame of the target video moves from the main display area of the second video playing page to the video playing area of the detail page, after the video frame of the target video moves from the main display area of the second video playing page to the video playing area of the detail page, or during the process of controlling the video frame of the target video to move from the main display area of the second video playing page to the video playing area of the detail page, and this embodiment does not limited to this case.

S204: receiving a page switching operation, in which the page switching operation includes a first sliding operation acting in the detail page, a second sliding operation acting in the video playing area or a clicking operation acting in the video playing area.

S205: in response to the page switching operation, switching the current page from the detail page to the first video playing page, and playing the video based on the video stream of the first video playing page, in which the video stream contains the target video or the associated video of the target video.

For example, when the current page is switched from the detail page to the first video playing page and the target video continues to be played in the first video playing page, the video frame of the target video can be controlled to move from the video playing area of the detail page to the main display area of the first video playing page, and the video information of the target video can be controlled to move out of the information display area of the detail page, and the video frame of the target video can be adjusted from the second size to a third size matching the main display area of the first video playing page, in which the first size is less than or equal to the third size.

The video playing method provided by this embodiment can show a relatively complete video picture to the user on the premise of ensuring that the video picture displayed in the video playing area can be clearly displayed, and avoid the situation that the page content changes too abruptly when switching from the video playing page to the detail page of the target video, thus improving the user's experience.

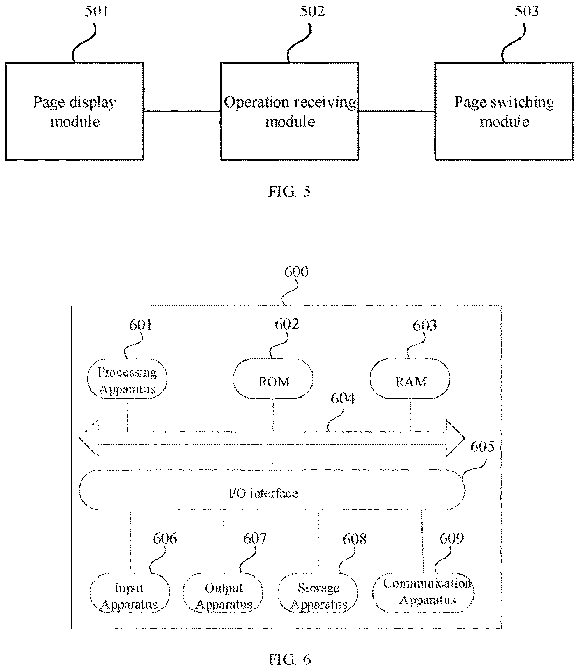

FIG. 5 is a structural block diagram of a video playing apparatus provided by an embodiment of the present disclosure. The apparatus can be realized by software and/or hardware, and can be configured in electronic device, such as a mobile phone or a tablet computer, and can be switched from a detail page of a video to a playing page of a video stream for video playing by executing the video playing method. As shown in FIG. 5, the video playing apparatus provided by this embodiment may include a page display module 501, an operation receiving module 502 and a page switching module 503, in which the page display module 501 is configured to display a detail page of a target video, wherein the detail page comprises a video playing area and an information display area, wherein the video playing area is used for playing the target video, and the information display area is used for displaying video information of the target video; the operation receiving module 502 is configured to receive a page switching operation, wherein the page switching operation comprises a first sliding operation acting in the detail page, a second sliding operation acting in the video playing area or a clicking operation acting in the video playing area; the page switching module 503 is configured to in response to the page switching operation, switch a current page from the detail page to a first video playing page, and playing a video based on a video stream of the first video playing page, wherein the video stream comprises the target video or an associated video of the target video.

The video playing apparatus provided by this embodiment displays a detail page of a target video through a page display module, in which the detail page includes a video playing area and an information display area, in which the video playing area is used for playing the target video and the information display area is used for displaying the video information of the target video; a page switching operation is received through an operation receiving module, in which the page switching operation comprises a first sliding operation in the detail page, a second sliding operation in the video playing area or a clicking operation in the video playing area; in response to the page switching operation, the page switching module switches the current page from the detail page of the target video to the first video playing page, and plays the video based on the video stream of the first video playing page, in which the video stream of the first video playing page contains the target video or the associated video of the target video. By adopting the above scheme, this embodiment switches from the video detail page to the video play page based on the user's sliding operation or clicking operation in the video play area, which can enrich the switching mode from the video detail page to the video play page and improve the user's experience.

In the above scheme, the page display module 501 may be configured to when the target video is played in a main display area of a second video playing page, switch the current page from the second video playing page to the detail page of the target video in response to a video detail viewing operation acting in the second video playing page.

In the above scheme, the page display module 501 may be configured to control a video frame of the target video to move from the main display area of the second video playing page to the video playing area of the detail page, and control the video information of the target video to move into the information display area of the detail page for display.

In the above scheme, the page display module 501 may be configured to switch the video frame of the target video from an original video frame with a first size to a target video frame with a second size, wherein the second size is less than or equal to the first size.

The video playing apparatus provided by this embodiment may further include: an area determining module, configured to before switching the video frame of the target video from an original video frame with a first size to a target video frame with a second size, determine a width value and a height value of the video playing area according to a page width value of the detail page and a first preset width-height ratio of the video playing area; and a video frame processing module, configured to process the original video frame of the target video according to the width value and the height value of the video playing area to obtain the target video frame.

In the above scheme, the video frame processing module may be configured to: when a width-height ratio of the original video frame of the target video is greater than 1, scale the original video frame according to the height value of the video playing area to obtain a first video frame, wherein a height value of the first video frame is the height value of the video playing area; clip the first video frame according to the width value of the video playing area, when a width value of the first video frame is greater than the width value of the video playing area, to obtain the target video frame; when the width value of the first video frame is less than or equal to the width value of the video playing area, take the first video frame as the target video frame.

In the above scheme, the video frame processing module may be configured to: when a width-height ratio of the original video frame of the target video is greater than a second preset width-height ratio and less than or equal to 1, scale the original video frame according to the height value of the video playing area to obtain the target video frame.

In the above scheme, the video frame processing module may be configured to: determine the width value of the target video frame according to the height value of the video playing area when a width-height ratio of the original video frame of the target video is less than or equal to a second preset width-height ratio; scale the original video frame according to the width value of the target video frame to obtain a second video frame, wherein a width value of the second video frame is equal to the width value of the target video frame; clip the second video frame according to the height value of the video playing area to obtain the target video frame when a height value of the second video frame is greater than the height value of the video playing area; when the height value of the second video frame is less than or equal to the height value of the video playing area, take the second video frame as the target video frame.

The video playing apparatus provided by this embodiment may further include: An information switching module, configured to after displaying the detail page of the target video, in response to a third sliding operation in the information display area, switch video information of the target video displayed in the information display area, and controlling a position of the video playing area to remain unchanged.

The video playing apparatus provided by the embodiment of the present disclosure can execute the video playing method provided by any embodiment of the present disclosure, and has corresponding functional modules for executing the video playing method. For technical details not described in detail in this embodiment, please refer to the video playing method provided by any embodiment of the present disclosure.

FIG. 6 is specifically referred below, and it shows the structure schematic diagram suitable for achieving the electronic device (for example, the terminal device) 600 in the embodiment of the present disclosure. The electronic device 600 in the embodiment of the present disclosure may include but not be limited to a mobile terminal such as a mobile phone, a notebook computer, a digital broadcasting receiver, a personal digital assistant (PDA), a PAD (tablet computer), a portable multimedia player (PMP), a vehicle terminal (such as a vehicle navigation terminal), and a fixed terminal such as a digital television (TV) and a desktop computer. The electronic device shown in FIG. 6 is only an example and should not impose any limitations on the functions and use scopes of the embodiments of the present disclosure.

As shown in FIG. 6, the electronic device 600 may include a processing apparatus (such as a central processing unit, and a graphics processor) 601, it may execute various appropriate actions and processes according to a program stored in a read-only memory (ROM) 602 or a program loaded from a storage apparatus 608 to a random access memory (RAM) 603. In RAM 603, various programs and data required for operations of the electronic device 600 are also stored. The processing apparatus 601, ROM 602, and RAM 603 are connected to each other by a bus 604. An input/output (I/O) interface 605 is also connected to the bus 604.

Typically, the following apparatuses may be connected to the I/O interface 605: an input apparatus 606 such as a touch screen, a touchpad, a keyboard, a mouse, a camera, a microphone, an accelerometer, and a gyroscope; an output apparatus 607 such as a liquid crystal display (LCD), a loudspeaker, and a vibrator; a storage apparatus 608 such as a magnetic tape, and a hard disk drive; and a communication apparatus 609. The communication apparatus 609 may allow the electronic device 600 to wireless-communicate or wire-communicate with other devices so as to exchange data. Although FIG. 6 shows the electronic device 600 with various apparatuses, it should be understood that it is not required to implement or possess all the apparatuses shown. Alternatively, it may implement or possess the more or less apparatuses.

According to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 609, or installed from the storage apparatus 608, or installed from ROM 602. When the computer program is executed by the processing apparatus 601, the above functions defined in the embodiments of the present disclosure are executed.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The computer-readable medium may be included in the electronic device; or the computer-readable medium may exist alone without being assembled into the electronic device.

The computer-readable medium carries one or more programs, and when the one or more programs are executed by the electronic device, the electronic device displays a detail page of a target video, wherein the detail page includes a video playing area and an information display area, and the video playing area is used for playing the target video, and the information display area is used for displaying video information of the target video; receives a page switching operation, wherein the page switching operation comprises a first sliding operation in the detail page, a second sliding operation in the video playing area or a clicking operation in the video playing area; in response to the page switching operation, switches the current page from the detail page to the first video playing page, and plays the video based on the video stream of the first video playing page, wherein the video stream contains the target video or the associated video of the target video.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit does not constitute a limitation for the unit itself in some cases.

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

According to one or more embodiments of the present disclosure, Example 1 provides a video playing method, which includes: displaying a detail page of a target video, wherein the detail page comprises a video playing area and an information display area, wherein the video playing area is used for playing the target video, and the information display area is used for displaying video information of the target video; receiving a page switching operation, wherein the page switching operation comprises a first sliding operation acting in the detail page, a second sliding operation acting in the video playing area or a clicking operation acting in the video playing area; in response to the page switching operation, switching a current page from the detail page to a first video playing page, and playing a video based on a video stream of the first video playing page, wherein the video stream comprises the target video or an associated video of the target video.

According to one or more embodiments of the present disclosure, Example 2 is the method according to Example 1, and displaying the detail page of the target video includes: when the target video is played in a main display area of a second video playing page, switching the current page from the second video playing page to the detail page of the target video in response to a video detail viewing operation acting in the second video playing page.

According to one or more embodiments of the present disclosure, Example 3 is the method according to Example 2, wherein the switching of the current page from the second video playing page to the detail page of the target video includes: controlling a video frame of the target video to move from the main display area of the second video playing page to the video playing area of the detail page, and controlling the video information of the target video to move into the information display area of the detail page for display.

According to one or more embodiments of the present disclosure, Example 4 is the method according to Example 2, wherein the switching of the current page from the second video playing page to the detail page of the target video includes: switching the video frame of the target video from an original video frame with a first size to a target video frame with a second size, wherein the second size is less than or equal to the first size.

According to one or more embodiments of the present disclosure, Example 5, according to the method described in Example 4, before switching the video frame of the target video from an original video frame with a first size to a target video frame with a second size, further comprises: determining a width value and a height value of the video playing area according to a page width value of the detail page and a first preset width-height ratio of the video playing area; processing the original video frame of the target video according to the width value and the height value of the video playing area to obtain the target video frame.

According to one or more embodiments of the present disclosure, Example 6 is the method according to Example 5, and the processing of the original video frame of the target video according to the width value and height value of the video playing area to obtain the target video frame includes: when a width-height ratio of the original video frame of the target video is greater than 1, scaling the original video frame according to the height value of the video playing area to obtain a first video frame, wherein a height value of the first video frame is the height value of the video playing area; clipping the first video frame according to the width value of the video playing area, when a width value of the first video frame is greater than the width value of the video playing area, to obtain the target video frame; when the width value of the first video frame is less than or equal to the width value of the video playing area, taking the first video frame as the target video frame.

According to one or more embodiments of the present disclosure, Example 7 is based on the method described in Example 5, wherein processing the original video frame of the target video according to the width value and height value of the video playing area to obtain the target video frame comprises: when a width-height ratio of the original video frame of the target video is greater than a second preset width-height ratio and less than or equal to 1, scaling the original video frame according to the height value of the video playing area to obtain the target video frame.

According to one or more embodiments of the present disclosure, Example 8, the method according to Example 5, processing the original video frame of the target video according to the width value and height value of the video playing area to obtain the target video frame, includes: determining the width value of the target video frame according to the height value of the video playing area when a width-height ratio of the original video frame of the target video is less than or equal to a second preset width-height ratio; scaling the original video frame according to the width value of the target video frame to obtain a second video frame, wherein a width value of the second video frame is equal to the width value of the target video frame; clipping the second video frame according to the height value of the video playing area to obtain the target video frame when a height value of the second video frame is greater than the height value of the video playing area; when the height value of the second video frame is less than or equal to the height value of the video playing area, taking the second video frame as the target video frame.

According to one or more embodiments of the present disclosure, Example 9, according to the method of any one of Examples 1-8, further comprises, after displaying the detail page of the target video, in response to a third sliding operation in the information display area, switching video information of the target video displayed in the information display area, and controlling a position of the video playing area to remain unchanged.

According to one or more embodiments of the present disclosure, Example 10 provides a video playing apparatus, which includes a page display module, configured to display a detail page of a target video, wherein the detail page comprises a video playing area and an information display area, wherein the video playing area is used for playing the target video, and the information display area is used for displaying video information of the target video; an operation receiving module, configured to receive a page switching operation, wherein the page switching operation comprises a first sliding operation acting in the detail page, a second sliding operation acting in the video playing area or a clicking operation acting in the video playing area; a page switching module, configured to in response to the page switching operation, switch a current page from the detail page to a first video playing page, and playing a video based on a video stream of the first video playing page, wherein the video stream comprises the target video or an associated video of the target video.

According to one or more embodiments of the present disclosure, Example 11 provides an electronic device including: at least one processor; and a memory communicatively connected to the at least one processor; wherein the memory stores a computer program executable by the at least one processor, and the computer program is executed by the at least one processor to enable the at least one processor to execute the video playing method as described in any one of Examples 1-9.

According to one or more embodiments of the present disclosure, Example 12 provides a computer-readable storage medium, storing computer instructions, wherein the computer instructions are used for, when executed by a processor, realizing the video playing method as described in any one of Examples 1-9.

According to one or more embodiments of the present disclosure, Example 13 provides a computer program product, comprising a computer program, wherein when the computer program is executed by a processor, the video playing method as described in any of Examples 1-9.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

## Claims

1. A video playing method, comprising:
displaying a detail page of a target video, wherein the detail page comprises a video playing area and an information display area, wherein the video playing area is used for playing the target video, and the information display area is used for displaying video information of the target video;
receiving a page switching operation, wherein the page switching operation comprises a first sliding operation acting in the detail page, a second sliding operation acting in the video playing area or a clicking operation acting in the video playing area;
in response to the page switching operation, switching a current page from the detail page to a first video playing page, and playing a video based on a video stream of the first video playing page, wherein the video stream comprises the target video or an associated video of the target video.

2. The method according to claim 1, wherein displaying the detail page of the target video comprises:
when the target video is played in a main display area of a second video playing page, switching the current page from the second video playing page to the detail page of the target video in response to a video detail viewing operation acting in the second video playing page.

3. The method according to claim 2, wherein switching the current page from the second video playing page to the detail page of the target video comprises:
controlling a video frame of the target video to move from the main display area of the second video playing page to the video playing area of the detail page, and controlling the video information of the target video to move into the information display area of the detail page for display.

4. The method according to claim 2, wherein switching the current page from the second video playing page to the detail page of the target video comprises:
switching the video frame of the target video from an original video frame with a first size to a target video frame with a second size, wherein the second size is less than or equal to the first size.

5. The method according to claim 4, before switching the video frame of the target video from an original video frame with a first size to a target video frame with a second size, further comprising:
determining a width value and a height value of the video playing area according to a page width value of the detail page and a first preset width-height ratio of the video playing area;
processing the original video frame of the target video according to the width value and the height value of the video playing area to obtain the target video frame.

6. The method according to claim 5, wherein processing the original video frame of the target video according to the width value and the height value of the video playing area to obtain the target video frame comprises:
when a width-height ratio of the original video frame of the target video is greater than 1, scaling the original video frame according to the height value of the video playing area to obtain a first video frame, wherein a height value of the first video frame is the height value of the video playing area;
clipping the first video frame according to the width value of the video playing area, when a width value of the first video frame is greater than the width value of the video playing area, to obtain the target video frame;
when the width value of the first video frame is less than or equal to the width value of the video playing area, taking the first video frame as the target video frame.

7. The method according to claim 5, wherein processing the original video frame of the target video according to the width value and the height value of the video playing area to obtain the target video frame comprises:
when a width-height ratio of the original video frame of the target video is greater than a second preset width-height ratio and less than or equal to 1, scaling the original video frame according to the height value of the video playing area to obtain the target video frame.

8. The method according to claim 5, wherein processing the original video frame of the target video according to the width value and the height value of the video playing area to obtain the target video frame comprises:
determining the width value of the target video frame according to the height value of the video playing area when a width-height ratio of the original video frame of the target video is less than or equal to a second preset width-height ratio;
scaling the original video frame according to the width value of the target video frame to obtain a second video frame, wherein a width value of the second video frame is equal to the width value of the target video frame;
clipping the second video frame according to the height value of the video playing area to obtain the target video frame when a height value of the second video frame is greater than the height value of the video playing area;
when the height value of the second video frame is less than or equal to the height value of the video playing area, taking the second video frame as the target video frame.

9. The method according to any one of claims 1-8, after displaying the detail page of the target video, further comprising:
in response to a third sliding operation in the information display area, switching video information of the target video displayed in the information display area, and controlling a position of the video playing area to remain unchanged.

10. A video playing apparatus, comprising:
a page display module, configured to display a detail page of a target video, wherein the detail page comprises a video playing area and an information display area, wherein the video playing area is used for playing the target video, and the information display area is used for displaying video information of the target video;
an operation receiving module, configured to receive a page switching operation, wherein the page switching operation comprises a first sliding operation acting in the detail page, a second sliding operation acting in the video playing area or a clicking operation acting in the video playing area;
a page switching module, configured to in response to the page switching operation, switch a current page from the detail page to a first video playing page, and playing a video based on a video stream of the first video playing page, wherein the video stream comprises the target video or an associated video of the target video.

11. An electronic device comprising:
at least one processor; and
a memory communicatively connected to the at least one processor;
wherein the memory stores a computer program executable by the at least one processor, and the computer program is executed by the at least one processor to enable the at least one processor to execute the video playing method according to any one of claims 1-9.

12. A computer-readable storage medium, storing computer instructions, wherein the computer instructions are used for, when executed by a processor, realizing the video playing method according to any one of claims 1-9.

13. A computer program product, comprising a computer program, wherein when the computer program is executed by a processor, the video playing method according to any one of claims 1-9 is realized.
